# EUROPÄISCHE PATENTSCHRIFT

(11) **EP 3 423 745 B1**
(45) Veröffentlichungstag und Bekanntmachung des Hinweises auf die Patenterteilung: **05.01.2022**
(21) Anmeldenummer: 17708754.1
(22) Anmeldetag: 02.03.2017
(51) Int. Cl.: F16L 23/08

(54) **PROFILSCHELLE**
PROFILED CLAMP
COLLIER PROFILÉ

(30) Priorität: 04.03.2016 DE 102016103988
(43) Veröffentlichungstag der Anmeldung: 09.01.2019
(73) Patentinhaber: NORMA Germany GmbH, 63477 Maintal (DE)
(72) Erfinder: LECBYCH, Miroslav, 69185 Dolni Dunajovice (CZ); OPLUSTIL, Julius, 664 84 Babice u Rosic (CZ); POLÁSEK, Lukás, 68725 Hluk (CZ); ZUKAL, Jiri, 634 00 Brno (CZ)
(74) Vertreter: Patentanwälte Olbricht Buchhold Keulertz
(86) Internationale Anmeldenummer: PCT/EP2017/054974
(87) Internationale Veröffentlichungsnummer: WO 2017/149103

(56) Entgegenhaltungen:
- EP-A1- 2 792 923
- EP-A1- 2 884 145
- WO-A1-2004/090347
- WO-A2-2008/102116
- DE-U1- 29 816 889
- US-A- 2 897 569

## Beschreibung

Die vorliegende Erfindung betrifft eine Profilschelle mit einer ersten profilierten Schellenhälfte und mit einer zweiten profilierten Schellenhälfte, mit denen unter Aufbringung einer Axialkraft zwei Flanschteile miteinander verbindbar sind, wobei an einem Ende der ersten Schellenhälfte ein erster Spannkopf und an einem Ende der zweiten Schellenhälfte ein zweiter Spannkopf zur Bildung einer Spanneinrichtung ausgebildet sind, und wobei die den Spannköpfen gegenüberliegenden Enden der Schellenhälften mittels einer gelenkigen Verbindung miteinander verbunden sind.

### STAND DER TECHNIK

Die WO 2008/102116 A2 offenbart eine Profilschelle, die zwei profilierte Schellenhälften aufweist. Die Profilierung der Schellenhälften ist so ausgebildet, dass eine Dreieck-, eine Dachkant- oder eine Trapezform dazu genutzt wird, zwei Flanschteile miteinander zu verbinden. Bei Aufbringen einer Umfangskraft in den Schellenhälften werden die beiden Flanschteile unter Bildung einer Axialkraft miteinander verbunden. Die Profilschelle weist eine Spanneinrichtung auf, die durch einen ersten Spannkopf und einen zweiten Spannkopf gebildet, die jeweils endseitig an einer der Schellenhälften ausgebildet sind. Die beiden Spannköpfe werden mit einem Schraubelement miteinander verbunden, so dass die Profilschelle durch Festziehen des Schraubelements gespannt wird.

Die beiden Schellenhälften sind diametral gegenüber der Spanneinrichtung mit einem Verbindungselement miteinander verbunden, das aus einem Federstahlmaterial ausgebildet ist. Das Verbindungselement ist an die jeweiligen Endseiten der Schellenhälften angeschweißt. Durch die federnden Eigenschaften des Verbindungselements entsteht eine gelenkige Verbindung zwischen den beiden Schellenhälften, so dass diese auf und zu bewegt werden können und dauerhaft miteinander verbunden sind.

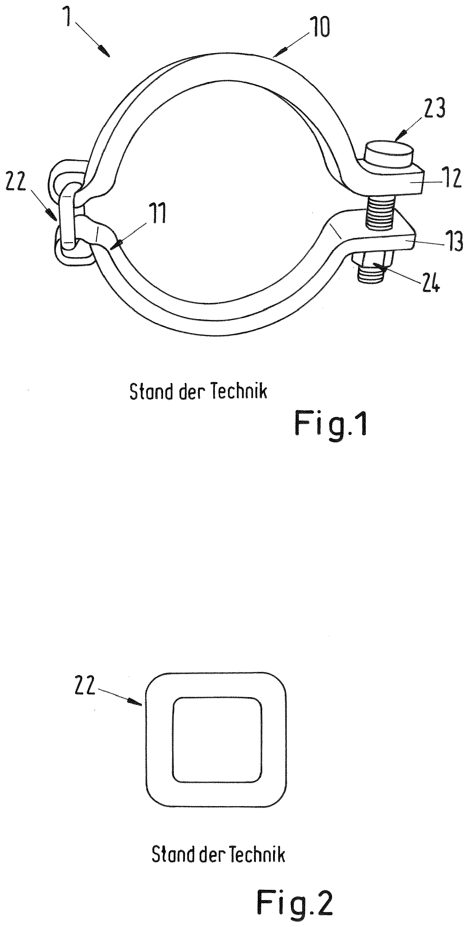

Ein weiteres Beispiel aus dem Stand der Technik zeigen die Figuren 1 und 2. Die dargestellte Profilschelle 1 weist eine erste Schellenhälfte 10 und eine zweite Schellenhälfte 11 auf. Die Schellenhälften 10 und 11 sind über endseitig angeformte erste und zweite Spannköpfe 12 und 13 mittels eines Schraubelements 18 in Kombination mit einer Schraubenmutter 24 miteinander verbunden. An den Spannköpfen 12 und 13 gegenüberliegenden Enden der Schellenhälften 10 und 11 befindet sich ein ringartiges Verbindungselement 22. Die Enden der Schellenhälften 10 und 11 können in das Verbindungselement 22 eingehakt werden. Dadurch entsteht eine gelenkige Verbindung zwischen den Schellenhälften 10, 11. Allerdings sind die Schellenhälften 10, 11 in ihrer Lage zueinander nur schlecht positionierbar. Zudem ermöglicht die gelenkige Verbindung mittels des Verbindungselements 22 keine Übertragung besonders hoher Flanschkräfte, die eigentlich mit der Spanneinrichtung aufgebracht werden könnten, so dass eine Limitierung der maximalen Flanschkräfte durch das Verbindungselement 22 gegeben ist.

Schließlich offenbart die EP 0 403 379 A1 eine dreigliedrige Profilschelle mit gelenkigen Verbindungen, die in Form von Filmgelenken zwischen drei profilierten Schellenteilen ausgebildet sind. Die zwei gelenkigen Verbindungen sind materialeinheitlich übergehend zwischen den drei Schellenteilen ausgeführt und diese sind dadurch gebildet, dass die Profilierung der Schellenteile an den Gelenkverbindungen in eine flache Querschnittsform des Bandmaterials übergeht. Nachteilhafterweise entstehen schnell Materialschädigungen an den gelenkigen Verbindungen, wenn diese beispielsweise mehrfach hin- und her gebogen werden.

DE 298 16 889 U1 betrifft beispielsweise eine Schelle mit zwei Flanschen, welche mit einer Spannvorrichtung versehen sind, wobei die Flansche ein im Querschnitt U-förmiges Profil mit einem Basisschenkel und zwei Seitenschenkeln aufweisen und die Öffnungen der Flanschprofile einander gegenüberliegen.

### OFFENBARUNG DER ERFINDUNG

Aufgabe der Erfindung ist die Weiterbildung einer Profilschelle zur Verbindung von zwei Flanschteilen unter Aufbringung einer möglichst hohen Axialkraft. Zudem soll die Profilschelle in der Konstruktion vereinfacht werden, so dass die Profilschelle insbesondere auf einfachere Weise herstellbar ist. Vorzugsweise soll die Anzahl der Einzelteile zur Herstellung der Profilschelle reduziert werden.

Diese Aufgabe wird ausgehend von einer Profilschelle gemäß dem Oberbegriff des Anspruches 1 mit den kennzeichnenden Merkmalen gelöst. Vorteilhafte Weiterbildungen der Erfindung sind in den abhängigen Ansprüchen angegeben.

Die Erfindung sieht vor, dass die gelenkige Verbindung mittels eines Flachbandabschnittes gebildet ist, wobei im Flachbandabschnitt ein Loch eingebracht ist, wobei das Loch eckig oder oval ausgebildet ist.

Der Flachbandabschnitt beschreibt dabei einen mit einer Ausdehnung in Umfangsrichtung ausgebildeten Abschnitt, der eine Länge in Umfangsrichtung der Profilschelle aufweist, die beispielsweise wenigstens der Breite des Bandmaterials der Schellenhälften in der Ausgangsbreite entspricht. Das Material des Flachbandabschnittes geht dabei einteilig und einheitlich in das Material der Schellenhälften über, so dass beide Schellenhälften einteilig miteinander verbunden sind. Durch die flache Ausführung der gelenkigen Verbindung als Flachbandabschnitt entsteht eine reduzierte Biegesteifigkeit, so dass ohne größere plastische Verformungen ein Auf- und Zubiegen der Schellenhälften zueinander mittels einer Verformung des Flachbandabschnittes ermöglicht wird, ohne dass der Flachbandabschnitt geschädigt wird. Im Vergleich zu einem bisher genutzten Verbindungselement beispielsweise in Ringform mit eingehakten Enden der Schellenhälften lassen sich über einen einteilig in die Schellenhälften übergehenden Flachbandabschnitt sehr große Umfangskräfte auf die Schellenhälften aufbringen, so dass die Flanschteile mit einer höheren Axialkraft miteinander verbindbar sind. Weiterhin vereinfacht sich die Herstellung der Profilschelle, da die beiden Schellenhälften, die Spannköpfe sowie die gelenkige Verbindung ausgehend von einem Flachbandmaterial aus einem einzigen Bauteil hergestellt werden können, ohne das weitere Fügeschritte ausgeführt werden müssen. Dieses Flachbandmaterial wird durch entsprechende Stanz-Biegeoperationen zu den beiden Schellenhälften mit dem dazwischen liegenden Flachbandabschnitt zur Bildung der gelenkigen Verbindung hergestellt. Ein weiterer Vorteil ergibt sich mit einer verbesserten Positionierung der beiden Schellenhälften zueinander. Insbesondere bei einer Montage der Profilschelle in schwer zugänglichen Bereichen müssen die beiden Schellenhälften dann nicht mehr extra zueinander positioniert werden. Der Flachbandabschnitt kann so vorgespannt sein, dass die Schellenhälften im Wesentlichen zueinander geschlossen sind, so dass sich die beiden Spannköpfe gegenüberstehen. Dadurch erleichtert sich weiterhin eine Montage, da die beiden Spannköpfe auf einfache Weise gegriffen werden können, um beispielsweise mit einem Schraubelement die Spanneinrichtung zu schließen.

Ein weiterer Vorteil wird dadurch erreicht, dass im Flachbandabschnitt ein Loch eingebracht ist. Das Loch ist dabei eckig oder oval ausgebildet. Mittels des Lochs kann eine Positionierung der Profilschelle am Flansch in Rotationsrichtung definiert werden, indem ein dem Loch zugeordneter Vorsprung am Flansch in das Loch eingreift. Ist das Loch in Umfangsrichtung länglich, beispielsweise oval ausgebildet, so bietet das Loch in Verbindung mit dem Vorsprung einen gewissen Verdrehbereich, beispielsweise zur Einjustage der Profilschelle. Zusätzlich wird der Vorteil erreicht, dass sich die Profilschelle beim Anziehen des Verbindungselements der beiden Spannköpfe, also beispielsweise beim Anziehen eines Schraubelements, auf dem Flansch in Umfangsrichtung nicht bzw. nur sehr begrenzt verdrehen kann.

Das Loch ist insbesondere so ausgestaltet, dass dieses in einer Hauptrichtung eine Abmessung von beispielsweise 3mm bis 8mm aufweist, wobei eine quer zur Hauptrichtung gelegene Nebenrichtung kleiner ausgebildet ist und eine Abmessung von beispielsweise 2mm bis 4mm aufweist. Ein entsprechender Vorsprung am Flansch, insbesondere an einem der beiden zu verbindenden Flanschteile, kann an die Abmessungen des Lochs angepasst sein.

Gemäß einer vorteilhaften Weiterbildung der Profilschelle weist der erste Spannkopf einen rechteckigen Durchgang auf, durch den ein Schraubelement mit einem komplementär ausgebildeten rechteckigen Absatz einsetzbar ist. Dadurch wird ein Verdrehen des Schraubelements verhindert, wenn dieses im ersten Spannkopf eingesetzt ist. Das Schraubelement kann rückseitig des zweiten Spannkopfs mit einer selbstsichernden Schraubenmutter verschraubt werden, wobei die Schraubenmutter zum Schließen der Spanneinrichtung auf dem Schraubelement aufgeschraubt wird.

Zur Aufbringung einer hohen Schließkraft mittels der Spanneinrichtung sind an den Endseiten der Spannköpfe Andruckfahnen ausgebildet, die bei einem angezogenen Schraubelement gegeneinander zur Anlage gelangen können. Dadurch wird insbesondere ein Verbiegen der Spannköpfe im Übergang in die Schellenhälften vermieden und die Spannköpfe verbleiben parallel zueinander, wodurch sich eine bessere Verspannung der Spannköpfe ergibt. Die aufbringbare Schließkraft der Spanneinrichtung kann dadurch erhöht werden, wobei eine erhöhte Schließkraft zu einer größeren Umfangskraft in den Spannköpfen führt, die durch die erfindungsgemäße gelenkige Verbindung mittels des Flachbandabschnittes übertragen wird.

Nach einer Weiterbildung der erfindungsgemäßen Profilschelle weist der Flachbandabschnitt gegenüber einer Ausgangsbreite der profilierten Schellenhälften eine durch seitliche Randeinschnitte gebildete Verjüngung auf. Die Ausgangsbreite der Schellenhälften ergibt sich, wenn die Trapez-, Dreieck- oder Dachstruktur der Schellenhälften in eine flache Struktur abgewickelt wird. Die so gebildete Ausgangsbreite weist eine größere Breite auf als die Breite des Flachbandabschnitts. Werden die Ränder der Ausgangsbreite zu den Schellenhälften umgebogen, um die Dreieck-, Trapez- oder Dachkantform zu erreichen, so kann die Verjüngung des Flachbandabschnitts so eingestellt werden, dass sich eine gleichbleibende Breite der Profilschelle zwischen den Schellenhälften und dem Flachbandabschnitt ergibt, obwohl der Flachbandabschnitt keine Profilierung aufweist und quer zur Umfangsrichtung der Schellenhälften eben ausgebildet ist.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Fig. 1: eine Profilschelle gemäß dem Stand der Technik,
- Fig. 2: ein Verbindungselement zur Bildung einer gelenkigen Verbindung zwischen zwei Schellenhälften gemäß Fig. 1,
- Fig. 3: eine Profilschelle mit den Merkmalen der vorliegenden Erfindung,
- Fig. 4: eine Seitenansicht der erfindungsgemäßen Profilschelle,
- Fig. 5: eine weitere Seitenansicht und eine gedrehte Ansicht der Profilschelle mit den Merkmalen der vorliegenden Erfindung und
- Fig. 6: ein abgewickeltes Flachmaterial, aus dem die einteilige Profilschelle herstellbar ist.

In Fig. 1 ist eine Profilschelle 1 gemäß dem Stand der Technik gezeigt. Die Profilschelle 1 weist eine erste Schellenhälfte 10 und eine zweite Schellenhälfte 11 auf. Zur Verbindung der beiden Schellenhälften 10, 11 dient ein Verbindungselement 22, welches in Fig. 2 vergrößert dargestellt ist (Stand der Technik). Die Enden der Schellenhälften 10 und 11 greifen in das rechteckig ausgebildete Verbindungselement 22 ein und sind so umgebogen, dass die Schellenhälften 10 und 11 verliersicher am Verbindungselement 22 angeordnet sind. Nachteilhafterweise ergibt sich jedoch keine besondere Positionierung der beiden Schellenhälften 10 und 11 zueinander. Überdies sind die übertragbaren Kräfte mittels des Verbindungselements 22 zwischen den Schellenhälften 10 und 11 begrenzt.

Die Spanneinrichtung ist ausgebildet mit einem Schraubelement 23 und mit einer Schraubenmutter 24, so dass die beiden Spannköpfe 12 und 13, die an den jeweiligen Schellenhälften 10 und 11 ausgebildet sind, aufeinander zu geführt und verspannt werden können, wenn die Schraubenmutter 24 weiter auf das Schraubelement 23 aufgeschraubt wird.

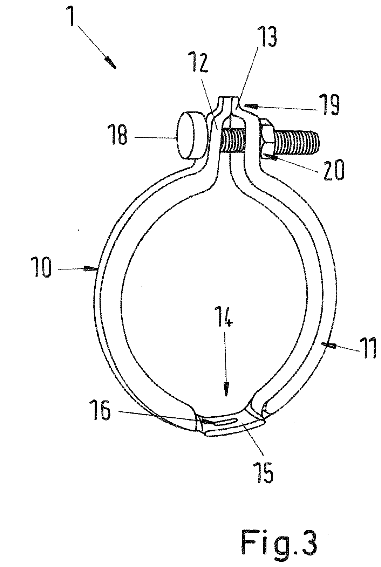

Fig. 3 zeigt eine Profilschelle 1 mit Merkmalen der vorliegenden Erfindung. Die erste Schellenhälfte 10 und die zweite Schellenhälfte 11 sind mit einer gelenkigen Verbindung 14 in Form eines Flachbandabschnitt 15 gelenkig miteinander verbunden. Der Flachbandabschnitt 15 geht materialeinheitlich in die jeweiligen Schellenhälften 10 und 11 einteilig über. Mittig im Flachbandabschnitt 15 befindet sich ein Loch 16. Der Flachbandabschnitt 15 ist derart flexibel ausgebildet, dass die beiden Schellenhälften 10 und 11 aufeinander zu und voneinander weg bewegt werden können, ohne dass der Flachbandabschnitt 15 geschädigt wird. Das Loch 16 dient zur definierten Positionierung der Profilschelle 1 auf einem Flansch, indem ein entsprechender Vorsprung am Flansch in das Loch 16 eingreifen kann. Eine Verdrehung der Profilschelle 1 in Umfangsrichtung wird dadurch verhindert.

An den Schellenhälften 10 und 11 sind Spannköpfe 12 und 13 angeformt, wobei die Spannköpfe 12 und 13 gegenüberliegend zum Flachbandabschnitt 15 an den Schellenhälften 1 und 11 angeformt sind. Endseitig an den Schellenhälften 10 und 11 befinden sich Andruckfahnen 19, die bei einem Anziehen der selbstsichernden Mutter 20 auf dem Schraubelement 18 in Kontakt miteinander treten können, um eine verbesserte Verspannungssituation der Schellenhälften 10 und 11 zueinander zu erreichen.

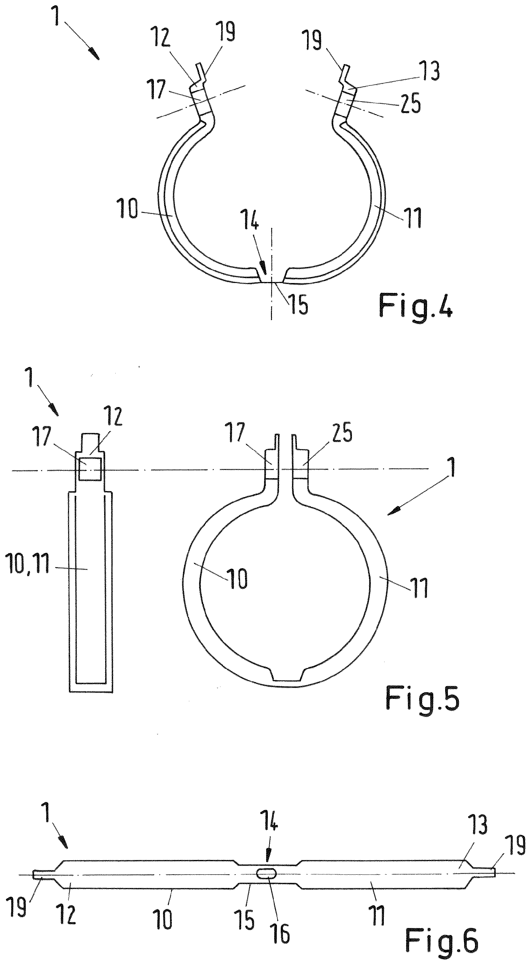

Die Figuren 4 und 5 zeigen weitere Ansichten der Profilschelle 1 mit den Merkmalen der Erfindung. Fig. 4 zeigt die Profilschelle 1 mit zueinander geöffneten ersten und zweiten Schellenhälften 10 und 11, wobei die gelenkige Verbindung 14 zwischen den beiden Schellenhälften 10 und 11 wieder durch den Flachbandabschnitt 15 gebildet ist. In den Spannköpfen 12 und 13 sind Durchgangslöcher eingebracht, wobei im ersten Spannkopf 12 ein Durchgang 17 und im zweiten Spannkopf 13 ist ein Durchgang 25 ausgebildet ist. An den freien Enden der ersten und zweiten Spannköpfe 12 und 13 befinden sich jeweils eine Andruckfahne 19.

Wie in Fig. 5 in den beiden Ansichten gezeigt, ist der Durchgang 17 mit einem rechteckigen Querschnitt ausgebildet, in den ein komplementär ausgebildeter rechteckiger Absatz des Schraubelements (Pos. 18, Fig. 3) einsetzbar ist. Hingegen kann der Durchgang 25 rund ausgebildet sein.

Fig. 6 zeigt schließlich ein Ausgangsmaterial zur Bildung der Profilschelle 1 mit mehreren Abschnitten. Das Ausgangsmaterial kann ein Flachbandstahl sein, und die verschiedenen Abschnitte des Flachbandstahls bilden die erste Schellenhälfte 10, den Flachbandabschnitt 15 zur Bildung der gelenkigen Verbindung 14 und die zweite Schellenhälfte 11. Endseitig schließen sich die ersten und zweiten Spannköpfe 12 und 13 mit den angeformten Andruckfahnen 19 an. Mittig im Flachbandabschnitt 15 ist das eingebrachte Loch 16 gezeigt. Durch anschließende Stanz- und Biegeoperationen kann die Profilschelle 1 funktionsfertig ausgebildet werden, wie in den Figuren 4 und 5 gezeigt.

Die erfindungsgemäße Profilschelle kann für verschiedene Anwendungen eingesetzt werden. Besonders vorteilhaft gestaltet sich die Verwendung der Profilschelle im Bereich von Turboladern von Kraftfahrzeugen. Dabei wird über die Schelle insbesondere eine Verbindung zwischen einem Turbinengehäuse und einem zentralen Gehäuse des Turboladers gesichert, wobei gleichzeitig Turbinengehäuse und das zentrale Gehäuse aufeinander zu gedrückt werden, so dass eine zusätzliche Abdichtung erfolgt.

Die Erfindung beschränkt sich in ihrer Ausführung nicht auf das vorstehend angegebene bevorzugte Ausführungsbeispiel. Vielmehr ist eine Anzahl von Varianten denkbar. Die Erfindung ist in den folgenden Ansprüchen definiert.

### Bezugszeichenliste

- 1: Profilschelle

- 10: erste Schellenhälfte
- 11: zweite Schellenhälfte
- 12: erster Spannkopf
- 13: zweiter Spannkopf
- 14: gelenkige Verbindung
- 15: Flachbandabschnitt
- 16: Loch
- 17: Durchgang
- 18: Schraubelement
- 19: Andruckfahne
- 20: selbstsichernde Schraubenmutter
- 21: Randeinschnitt
- 22: Verbindungselement
- 23: Schraubelement
- 24: Schraubenmutter
- 25: Durchgang

## Patentansprüche

1. Profilschelle (1) mit einer ersten profilierten Schellenhälfte (10) und mit einer zweiten profilierten Schellenhälfte (11), mit denen unter Aufbringung einer Axialkraft zwei Flanschteile miteinander verbindbar sind, wobei an einem Ende der ersten Schellenhälfte (10) ein erster Spannkopf (12) und an einem Ende der zweiten Schellenhälfte (11) ein zweiter Spannkopf (13) zur Bildung einer Spanneinrichtung ausgebildet sind, wobei die den Spannköpfen (12, 13) gegenüberliegenden Enden der Schellenhälften (10, 11) mittels einer gelenkigen Verbindung (14) miteinander verbunden sind,
wobei die gelenkige Verbindung (14) mittels eines Flachbandabschnittes (15) gebildet ist,
wobei im Flachbandabschnitt (15) ein Loch (16) eingebracht ist,
**dadurch gekennzeichnet, dass** das Loch (16) eckig oder oval ausgebildet ist.

2. Profilschelle (1) nach Anspruch 1, **dadurch gekennzeichnet, dass** das Loch (16) in Umfangsrichtung länglich ausgebildet ist.

3. Profilschelle (1) nach einem der vorgenannten Ansprüche, **dadurch gekennzeichnet, dass** das Loch (16) in einer Hauptrichtung eine Abmessung von 3mm bis 8mm aufweist, wobei eine quer zur Hauptrichtung gelegene Nebenrichtung eine Abmessung von 2mm bis 4mm aufweist.

4. Profilschelle (1) nach einem der vorgenannten Ansprüche, **dadurch gekennzeichnet, dass** der erste Spannkopf (12) einen rechteckigen Durchgang (17) aufweist, durch den ein Schraubelement (18) mit einem komplementär ausgebildeten rechteckigen Absatz einsetzbar ist.

5. Profilschelle (1) nach einem der vorgenannten Ansprüche, **dadurch gekennzeichnet, dass** an den Endseiten der Spannköpfe (12, 13) Andruckfahnen (19) ausgebildet sind, die bei einem angezogenen Schraubelement (18) gegeneinander zur Anlage gelangen.

6. Profilschelle (1) nach einem der Ansprüche 4 oder 5, **dadurch gekennzeichnet, dass** das Schraubelement (18) mit einer selbstsichernden Schraubenmutter (20) verschraubt ist.

7. Profilschelle (1) nach einem der vorgenannten Ansprüche, **dadurch gekennzeichnet, dass** der Flachbandabschnitt (15) gegenüber einer Ausgangsbreite der profilierten Schellenhälften (10, 11) eine durch seitliche Randeinschnitte (21) gebildete Verjüngung aufweist.

## Claims

1. Profiled clamp (1) having a first profiled clamp half (10) and having a second profiled clamp half (11), by means of which two flange parts can be connected to one another by application of an axial force, wherein, in order to form a tensioning device, a first tensioning head (12) is formed at an end of the first clamp half (10) and a second tensioning head (13) is formed at an end of the second clamp half (11), wherein those ends of the clamp halves (10, 11) which are located opposite the tensioning heads (12, 13) are connected to one another by means of an articulated connection (14),
wherein the articulated connection (14) is formed by means of a flat strip portion (15),
wherein a hole (16) is introduced into the flat strip portion (15),
**characterized in that** the hole (16) is of angular or oval form.

2. Profiled clamp (1) according to Claim 1, **characterized in that** the hole (16) is of elongate form in a circumferential direction.

3. Profiled clamp (1) according to either of the preceding claims, **characterized in that** the hole (16) has a dimension of 3 mm to 8 mm in a main direction, wherein a secondary direction located transversely with respect to the main direction has a dimension of 2 mm to 4 mm.

4. Profiled clamp (1) according to one of the preceding claims, **characterized in that** the first tensioning head (12) comprises a rectangular passage (17), through which a screw element (18) with a rectangular shoulder of complementary form can be inserted.

5. Profiled clamp (1) according to one of the preceding claims, **characterized in that** pressing lugs (19), which come into abutment against one another in the case of a tightened screw element (18), are formed on the end faces of the tensioning heads (12, 13).

6. Profiled clamp (1) according to either of Claims 4 and 5, **characterized in that** the screw element (18) is screw-connected with a self-locking nut (20).

7. Profiled clamp (1) according to one of the preceding claims, **characterized in that** the flat strip portion (15) has a tapering, which is formed by lateral edge incisions (21), in relation to an initial width of the profiled clamp halves (10, 11).

## Revendications

1. Collier profilé (1) comprenant une première moitié de collier profilé (10) et une deuxième moitié de collier profilé (11), avec lesquelles deux parties à bride peuvent être reliées l'une à l'autre par application d'une force axiale, une première tête de serrage (12) étant formée à une extrémité de la première moitié de collier (10) et une deuxième tête de serrage (13) étant formée à une extrémité de la deuxième moitié de collier (11) de manière à former un dispositif de serrage, les extrémités des moitiés de collier (10, 11) opposées aux têtes de serrage (12, 13) étant reliées l'une à l'autre au moyen d'une liaison articulée (14),
la liaison articulée (14) étant formée au moyen d'une section de bande plate (15),
un trou (16) étant pratiqué dans la section de bande plate (15),
**caractérisé en ce que** le trou (16) est configuré sous forme angulaire ou ovale.

2. Collier profilé (1) selon la revendication 1, **caractérisé en ce que** le trou (16) est configuré sous forme allongée dans la direction circonférentielle.

3. Collier profilé (1) selon l'une quelconque des revendications précédentes, **caractérisé en ce que** le trou (16) présente dans une direction principale une dimension de 3 mm à 8 mm, une direction secondaire située perpendiculairement à la direction principale présentant une dimension de 2 mm à 4 mm.

4. Collier profilé (1) selon l'une quelconque des revendications précédentes, **caractérisé en ce que** la première tête de serrage (12) comprend un passage rectangulaire (17), à travers lequel un élément de vissage (18) muni d'un épaulement rectangulaire configuré de manière complémentaire peut être inséré.

5. Collier profilé (1) selon l'une quelconque des revendications précédentes, **caractérisé en ce que** des talons de pression (19) sont formés sur les côtés d'extrémité des têtes de serrage (12, 13), qui viennent en application l'un contre l'autre lorsqu'un élément de vissage (18) est serré.

6. Collier profilé (1) selon l'une quelconque des revendications 4 ou 5, **caractérisé en ce que** l'élément de vissage (18) est vissé avec un écrou de vis autobloquant (20).

7. Collier profilé (1) selon l'une quelconque des revendications précédentes, **caractérisé en ce que** la section de bande plate (15) présente un rétrécissement formé par des incisions de bord latérales (21) par rapport à une largeur initiale des moitiés de collier profilé (10, 11).
